(19) Europäisches Patentamt
European Patent Office
Office européen des brevets

(11) **EP 1 860 515 A2**

(12) **EUROPEAN PATENT APPLICATION**

(43) Date of publication:
**28.11.2007 Bulletin 2007/48**

(51) Int Cl.:
**G05D 1/02** (2006.01)

(21) Application number: **06254730.2**

(22) Date of filing: **11.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.05.2006 JP 2006146218**

(71) Applicant: **Fujitsu Ltd.**
**Kawasaki-shi, Kanagawa 211-8588 (JP)**

(72) Inventor: **Sawasaki, Naoyuki,**
**c/o Fujitsu Limited**
**Kawasaki-shi,**
**Kanagawa 211-8588 (JP)**

(74) Representative: **Mohun, Stephen John**
**Haseltine Lake**
**Lincoln House**
**300 High Holborn**
**London WC1V 7JH (GB)**

(54) **Mobile robot, and control method and program for the same**

(57)     A path planning unit plans a travel path to a destination based on an estimated current travel position and outputs a travel command to a travel control unit to perform travel control so as to follow the travel path. A travel position prediction unit accumulates a travel distance, which is detected by a wheel turning-angle sensor, to the estimated current travel position so as to predict the current travel position. A predictive image generating unit generates a plurality of predictive edge images which are composed of edge information and captured when a camera is virtually disposed at the predicted current travel position and candidate positions in the vicinity of it based on layout information of the environment, and an edge image generating unit generates an actual edge image from the actual image captured by the camera (18). A position estimation unit compares the edge image with the plurality of predictive edge images, estimates the candidate position of the predictive edge image at which the degree of similarity is the maximum, and updates the travel position of the path planning unit and the travel position prediction unit.

FIG. 1

**Description**

BACKGROUND OF THE INVENTION

1. Field of the Invention

The present invention relates to a mobile robot which can carry out various activities such as guiding or leading of people, transportation of objects, and go-round or patrolling and to a control method and a program therefor; and particularly relates to a mobile robot which travels to a destination position while estimating the current travel position from a captured image of a camera and to a control method and a program therefor.

2. Description of the Related Arts

Recently, other than industrial robots operated in manufacturing sites, development of mobile robots which can be adapted to personal uses in, for example, homes, welfare, medical services, and public is underway. Such a robot requires an autonomous mobile function according to a self-position estimation method in which the position of itself during traveling is estimated by use of a sensor (s) so as to follow a target track (path). As the self-position estimation method of a mobile robot, dead reckoning which estimates the travel position in accordance with the turning angle of wheels obtained by a turning-angle sensor(s) by use of a model of the mobile robot is frequently employed. A method which utilizes particular marks in the environment with which the mobile robot recognizes the position such as guides like white lines and the like, magnetic rails, and corner cubes is also employed. Furthermore, as a method which does not use particular marks, a method which estimates the position and the posture of a robot by measuring the positions and directions of edge of walls or a floor according to images obtained by a camera is also proposed (JP 09-053939).
However, such conventional self-position estimation methods of mobile robots involve the following problems. First of all, the dead reckoning which estimates the travel position of a mobile robot according to the turning angle of wheels has a problem in accumulation of errors caused by slippage, etc. of the wheels. Therefore, methods in which dead reckoning and gyro sensors are combined are widely employed; however, there still remains a problem of accumulation of errors caused by drift of the gyroscopes, while the influence of slippage, etc. can be eliminated. The method which utilizes particular marks with which a robot recognizes a position in the environment involves a problem that the particular marks have to be placed in the environment side and cost is increased. Furthermore, in the method which estimates the position and the posture of a robot by measuring the positions and directions of edges of walls and a floor according to an image of a camera, the positions of plural types of specified image characteristics in real space have to be registered in advance. In current circumstances, this registering operation is a man-made operation in which, for example, the characteristics are determined with eyes on site and the positions thereof are measured and registered every time, which involves a problem that massive labor hours and time are required.

SUMMARY OF THE INVENTION

In addition, according to the present invention to provide a mobile robot and a control method and program therefor which can readily and accurately estimate the travel position by utilizing an image of a camera.
The present invention provides a mobile robot. In the present invention, the mobile robot which travels in an environment such as a facility is characterized by having
a path planning unit which plans a travel path to a destination based on an estimated current travel position and outputs a travel command;
a travel control unit which performs travel control so as to follow the travel path based on the travel command of the path planning unit;
a position prediction unit which accumulates a travel distance, which is detected by a turning-angle sensor of a wheel, to the estimated current travel position and predicts the current travel position;
a predictive image generating unit which generates a plurality of predictive edge images, which are composed of edge information and captured when the imaging unit is virtually disposed at the current travel position predicted by the position prediction unit and candidate
positions in the vicinity of it, based on layout information of the environment;
an edge image generating unit which extracts edge information from an actual image of the traveling direction which is captured by the imaging unit and generates an actual edge image; and
a position estimation unit which compares the actual edge image with the plurality of predictive edge images, estimates a candidate position of the predictive edge image at which the degree of similarity is the maximum as a travel position, and updates the travel position of the path planning unit and the position prediction unit.
Herein, the position estimation unit calculates a correlation between the actual edge image generated by differentiating processing of the actual image and each of the predictive edge images and estimates the candidate position of the predictive edge image at which the correlation is the maximum as the travel position.

The position estimation unit may calculate the number of overlapping pixels of the actual edge image generated by differentiating processing of the actual image and each of the predictive edge images and estimate the candidate position of the predictive edge image at which the number of overlapping pixels is the maximum as the travel position.

The predictive image generating unit changes the image-capturing direction of the imaging unit for each of the candidate positions and generates the plurality of predictive edge images.

The predictive image generating unit generates the predictive edge images based on camera parameters of the imaging unit and three-dimensional coordinates of the layout information.

The mobile robot of the present invention repeats, every predetermined travel distance or predetermined movement time, the estimation process of the current travel position based on the actual edge image and the plurality of predictive edge images.

(Method)

The present invention provides a control method of a mobile robot. In the present invention, the control method of the mobile robot which travels in an environment such as a facility, is characterized by having

a path planning step in which a travel path to a destination is planned based on an estimated current travel position and a travel command is output;

a travel control step in which travel control is performed so as to follow the travel path based on the travel command of the path planning step;

a position prediction step in which a travel distance, which is detected by a turning-angle sensor of a wheel, is accumulated to the estimated current travel position and the current travel position is predicted;

a predictive image generating step in which a plurality of predictive edge images, which are composed of edge information and captured when the imaging unit is virtually disposed at the current travel position predicted in the position prediction step and candidate positions in the vicinity of it, are generated based on layout information of the environment;

an edge image generating step in which edge information is extracted from an actual image of the traveling direction which is captured by the imaging unit and an actual edge image is generated; and

a position estimation step in which the actual edge image is compared with the plurality of predictive edge images, a candidate position of the predictive edge image at which the degree of similarity is the maximum is estimated as a travel position, and the travel position in the path planning step and the position prediction step is updated.

(Program)

The present invention provides a program which controls a mobile robot. The program of the present invention is characterized by causing a computer of a mobile robot which travels in an environment such as a facility to execute,

a path planning step in which a travel path to a destination is planned based on an estimated current travel position and a travel command is output;

a travel control step in which travel control is performed so as to follow the travel path based on the travel command of the path planning step;

a position prediction step in which a travel distance, which is detected by a turning-angle sensor of a wheel, is accumulated to the estimated current travel position and the current travel position is predicted;

a predictive image generating step in which a plurality of predictive edge images, which are composed of edge information and captured when the imaging unit is virtually disposed at the current travel position predicted in the position prediction step and candidate positions in the vicinity of it, are generated based on layout information of the environment;

an edge image generating step in which edge information is extracted from an actual image of the traveling direction which is captured by the imaging unit and an actual edge image is generated; and

a position estimation step in which the actual edge image is compared with the plurality of predictive edge images, a candidate position of the predictive edge image at which the degree of similarity is the maximum is estimated as a travel position, and the travel position in the path planning step and the position prediction step is updated.

According to the present invention, a plurality of candidate positions are set in the vicinity of the current travel position of a mobile robot predicted by dead reckoning using a turn-angle sensor of a wheel, predictive edge images which are composed of edge information and captured when an imaging unit is virtually disposed at each of the candidate positions are generated based on layout information of the environment such as the positions and heights of pillars and walls, the predictive edge images at the candidate positions are compared with an actual edge image which is extraction of edge information from an actual image, and the candidate position of the predictive edge image which is the most similar to it is estimated as the current travel position of the robot. Therefore, merely by storing comparatively simple layout information of the environment describing wall, pillar positions, etc. in advance in the mobile robot, the predictive edge images can be readily generated, the operation of registering the positions of plural types of specified image characteristics in real space in advance is not required, and self-position estimation utilizing camera images can be simply and accurately performed.

Moreover, when determination of the degree of similarity by comparison between the predictive edge images and the actual edge image is evaluated by correlation values of the images, and the candidate position of the predictive edge image at which the correlation value is the maximum is estimated as the travel position, the influence of different details of the predictive edge images and the actual edge image is eliminated, a stable comparison process can be realized, and, furthermore, since it is carried out by correlation calculations of edge information, the calculation amount is reduced and it can be realized by a small device.

Moreover, when the determination of the degree of similarity by means of comparison of the predictive edge image with the actual edge image is evaluated by the number of overlapping pixels of the edge images, and the candidate position of the predictive edge image at which the number of overlapping pixels is the maximum is estimated as the travel position, a further stable comparison process can be realized compared with the image correlation, and, since it is the calculation of the total number of corresponding edge pixels, it can be realized with a further small calculation amount compared with the correlation calculation.

Moreover, the plurality of predictive edge images are generated while changing the image-capturing direction of the imaging unit for each of the candidate positions; therefore, the plurality of predictive edge images of different image-capturing directions are generated at the same candidate position and compared with the actual edge image. Even if the image-capturing direction of the actual image is deviated from the planned travel direction, as long as the predictive edge image of the maximum degree of similarity can be obtained, it is estimated as a correct travel position, and the estimation accuracy of the travel position can be further enhanced.

Moreover, in generation of the predictive edge images which are generated when the imaging unit is virtually disposed at candidate positions, the generation can be readily and accurately carried out based on the camera parameters of the imaging unit and the three-dimensional coordinates of the layout information.

Furthermore, the estimation process of the current travel position based on the actual edge image and the plurality of predictive edge images is repeated in a processing cycle of a predetermined travel distance or predetermined movement time; therefore, the estimation accuracy can be enhanced by shortening the processing cycle. The above and other objects, features, and advantages of the present invention will become more apparent from the following detailed description with reference to the drawings.

BRIEF DESCRIPTION OF THE DRAWINGS

FIG. 1 is an explanatory drawing of an embodiment of a mobile robot according to the present invention;
FIG. 2 is a block diagram of a hardware configuration of the mobile robot to which the embodiment of FIG. 1 is applied;
FIG. 3 is a block diagram of a functional configuration showing an embodiment of a mobile robot control device according to the present invention;
FIG. 4 is an explanatory drawing of a planned path generated by path planning of the present embodiment;
FIG. 5 is an explanatory drawing of an estimation process of a travel position according to the present embodiment which is executed during travel and uses a camera-captured image;
FIG. 6 is an explanatory diagram of candidate positions set in the vicinity of a predicted travel position for generating predictive edge images;
FIG. 7 is an explanatory diagram of a process of obtaining degrees of similarity of the actual edge image and predictive edge images by correlation calculations in the position estimation process of the present embodiment;
FIG. 8 is an explanatory diagram of a process of obtaining the degrees of similarity of the actual edge image and predictive edge images by the number of overlapping pixels in the position estimation process of the present embodiment; and
FIGs. 9A and 9B are flow charts of the travel position estimation process in the present embodiment.

DETAILED DESCRIPTION OF THE PREFERRED EMBODIMENTS

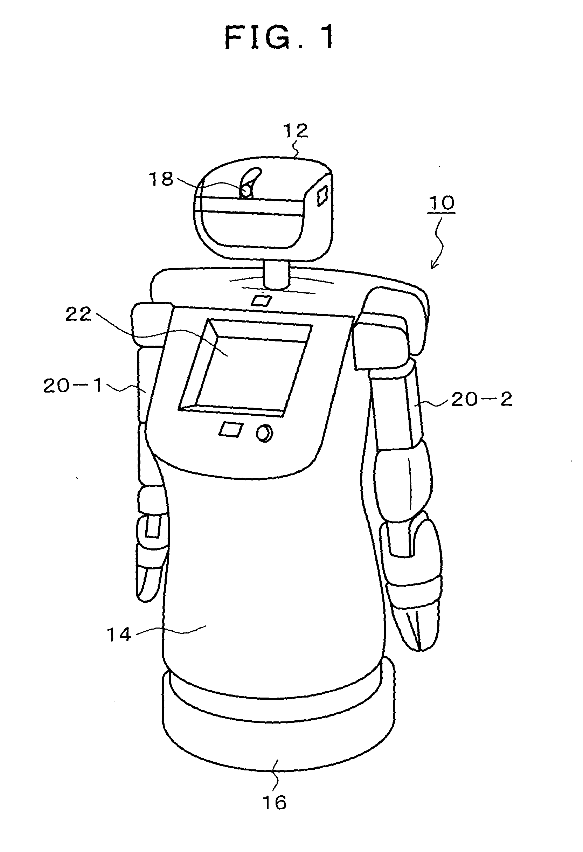

FIG. 1 is an explanatory diagram of an embodiment of a mobile robot according to the present invention. In FIG. 1, the mobile robot 10 of the present embodiment is composed of five units, that is, a head unit 12, a body 14, a moving unit 16, a left arm 20-1, and a right arm 20-2. The size of the mobile robot 10 is about 60 cm in diameter when horizontally viewed and is about 130 cm in height. The head unit 12 can turn horizontally relative to the body 14, and a camera 18 using imaging devices such as CCDs is directed to the front and attached to the head unit 12. The sight-line direction of the camera 18 can be adjusted by turning the head unit 12. If a plurality of cameras having different sight-line directions are mounted on the head unit 12, the sight directions can be instantly changed by switching the cameras without using a pan/tilt mechanism. In the left arm 20-1 and the right arm 20-2, joints having four degrees of freedom with which hands can be moved to arbitrary positions and grippers necessary for holding operations are provided, respectively. A touch-panel-equipped LCD 22 is mounted on the body 14, such that various display and necessary operations of the mobile robot 10 can be performed. Left and right drive wheels and auxiliary wheels are provided in the moving unit 16, and straight advancement, backward movement, and turning can be made by independent drive of the left and right drive wheels.

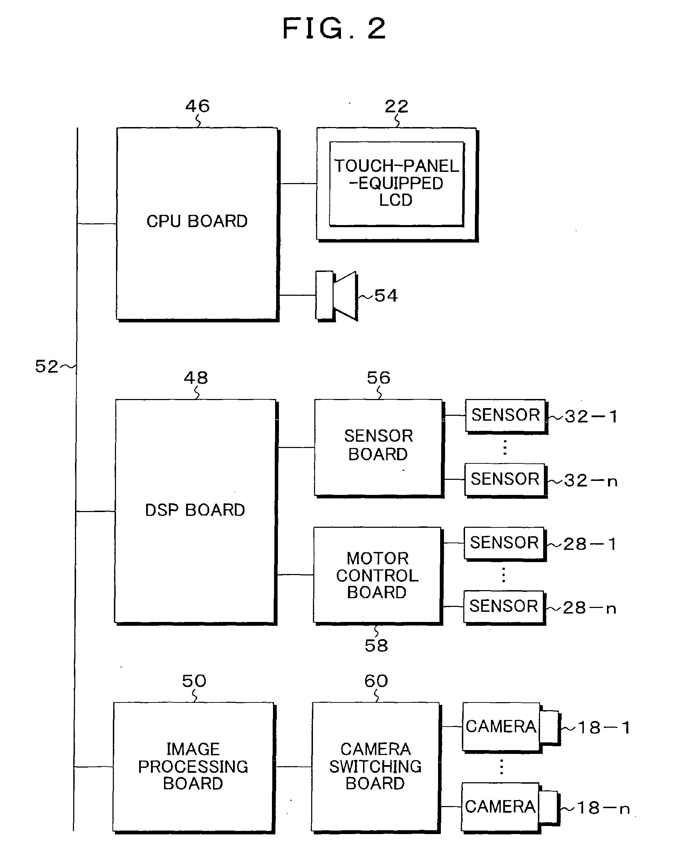

FIG. 2 is a block diagram of a hardware configuration incorporated in the mobile robot of the present embodiment. In FIG. 2, in the mobile robot 10, a CPU board 46, a DSP board 48, and an image processing board 50 are incorporated as mobile robot control devices, and they are connected to one another by a network bus 52. The touch-panel-equipped LCD 22 and a speaker 54 are connected to the CPU board 46, and the CPU board 46 performs processes of user interfaces and operation instructions. To the DSP board 48, various sensors 32-1 to 32-n are connected via a sensor board 56, and motors 28-1 to 28-n used in various types of drive are also connected via the motor control board 58. The DSP board 48 mainly executes real-time processing including, for example, travel control of the mobile robot. To the image processing board 50, a plurality of cameras 18-1 to 18-n, which are loaded on the mobile robot, are connected via a camera switching board 60. The image processing board 50 switches to and select any one of the cameras 18-1 to 18-n that is to be subjected to image processing by the camera switching board 60, and the image information read from the selected camera is subjected to image processing by the image processing board 50 so as to perform necessary robot operations.

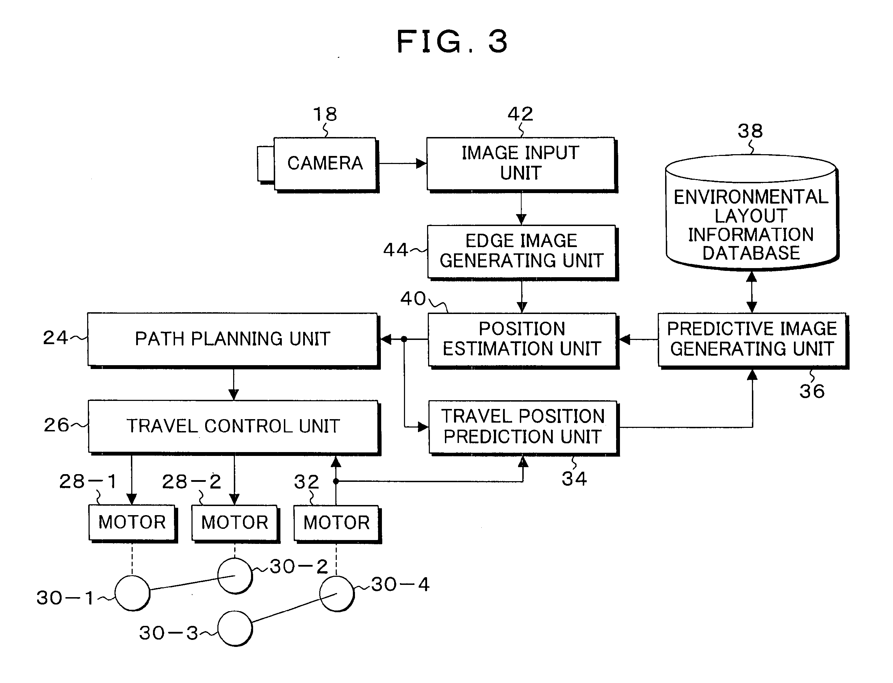

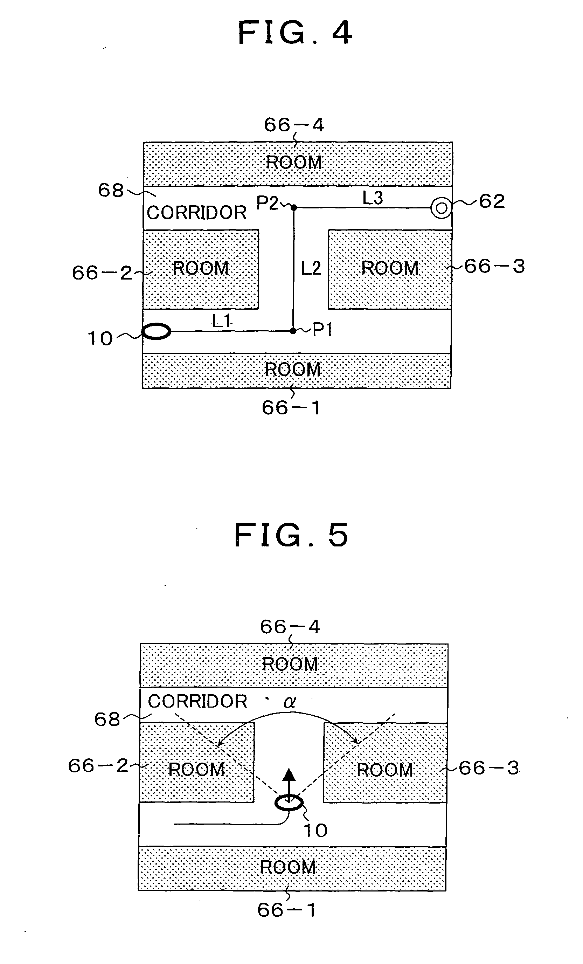

FIG. 3 is a block diagram of a functional configuration showing an embodiment of a mobile robot control device according to the present invention, which is realized by the environment according to the hard ware configuration of the mobile robot shown in FIG. 2. In FIG. 3, the mobile robot control device of the present embodiment is composed of a path planning unit 24, a travel control unit 26, a travel position prediction unit 34, a predictive image generating unit 36, an environmental layout information database 38, a position estimation unit 40, an image input unit 42, and an edge image generating unit 44. The path planning unit 24 plans a travel path to a destination, which is set in advance, based on the current travel position determined by the position estimation unit 40 and issues a travel command to the travel control unit 26. In response to this travel command, the travel control unit 26 independently drives left and right drive wheels 30-1 and 30-2 by driving motors 28-1 and 28-2 and causes the mobile robot to travel along the planned path to the destination. The travel control unit 26 connects to the motors 28-1 and 28-2 as control loads, and the motors 28-1 and 28-2 independently drive the left and right drive wheels 30-1 and 30-2 provided in the moving unit 26 of FIG. 1. A wheel angle sensor 32 is provided for auxiliary wheels 30-3 and 30-4 and outputs pulse signals corresponding to the rotation of the auxiliary wheels 30-3 and 30-4 accompanying movement of the drive wheels 30-1 and 30-2. The number of auxiliary wheels may be one. The travel control of the mobile robot according to the planned path is as the following, for example when the layout environment of FIG. 4 is taken as an example. When an arbitrary destination 62 is set relative to the current position of the mobile robot 10, the path planning unit 24 plans, for example, a shortest route which passes through a corridor 68 lead to the destination 62 and surrounded by rooms 66-1 to 66-4 as an expected path 64. When the expected path 64 is planned, the current travel position obtained from the position estimation unit 40 is compared with the expected path 64, and a travel command is output to the travel control unit 26 such that the expected path 64 is followed. The travel control unit 26 causes the mobile robot to travel along the expected path 64 by drive of the drive wheels 30-1 and 30-2 by driving the motors 28-1 and 28-2. According to the travel command from the path planning unit 24, straight-advancement movement distances L1 , L2, and L3 in the expected path 64 and course change information at course change points P1 and P2 are utilized; the traveled distance is obtained by counting the pulses detected from the wheel turning angle sensor 32 during travel, multiplying each of them by the travel distance per one pulse, and accumulating them; arrival to the course change point P1 is recognized when it is equal to the set distance L1 of the expected path 64; the traveling direction is turned to the left by 90 degrees; it subsequently travels the straight-advancement distance L2; the traveling direction is turned to the right by 90 degrees at the course change point P2, and finally it arrives at the destination 62 by traveling the travel distance L3. In the travel control by the travel control unit 26 based on the travel command from the path planning unit 24 according to such expected path 64, an error is caused in the detection accuracy of the wheel turning angle sensor 32 due to, for example, the slip ratio of the wheels, and an error is caused between the estimated travel position and the actual travel position; therefore, in the present embodiment, the correct current travel position of the mobile robot is estimated by utilizing images taken by the camera 18, and travel control is performed while updating it, thereby accurately and smoothly performing travel to the destination 62 according to the expected path 64. Estimation of the current travel position of the mobile robot in the present embodiment is performed by the travel position prediction unit 34, the predictive image generating unit 36, the camera 18 serving as an imaging unit, the image input unit 42, the edge image generating unit 44, and the position estimation unit 40. The travel position prediction unit 34 accumulates the travel distance, which is calculated based on the detected pulses from the wheel turning angle sensor 32, relative to the estimated travel position in the position estimation unit 40, and predicts the current travel position. The predictive image generating unit 36 virtually disposes the camera 18 at the current travel position predicted by the travel position prediction unit 34 and candidate positions in the vicinity thereof based on the layout information of the environment such as the positions and heights of pillars and walls stored in advance in the environmental layout information database 38 and generates a plurality of predictive edge images composed of imaged edge information. In this course, the generation of the predictive edge images performed by the predictive image generating unit 36 is executed every time when the travel distance obtained by the travel position prediction unit 34 reaches a predetermined distance $\Delta L$, for example, $\Delta L=1$ m. Every time the predetermined distance $\Delta L$ is traveled by the travel position prediction unit 34, the image of the traveling direction of the mobile robot taken by the camera 18 is input to the image input unit 42, and the image input unit outputs it to the edge image generating unit 44, generates an actual edge image in which merely the edges of pillars and walls in the actual image are extracted, and outputs it to the position estimation unit 40. The position estimation unit 40 compares the actual edge image output from the edge image generating unit 44 with the predictive edge images of the plurality of candidate positions generated by the predictive image generating unit 36, estimates the candidate position of the predictive edge image that has the maximum degree of similarity as the current travel position, and update the travel position in the path planning unit 24 and the travel position prediction unit 34 to the estimated correct position.

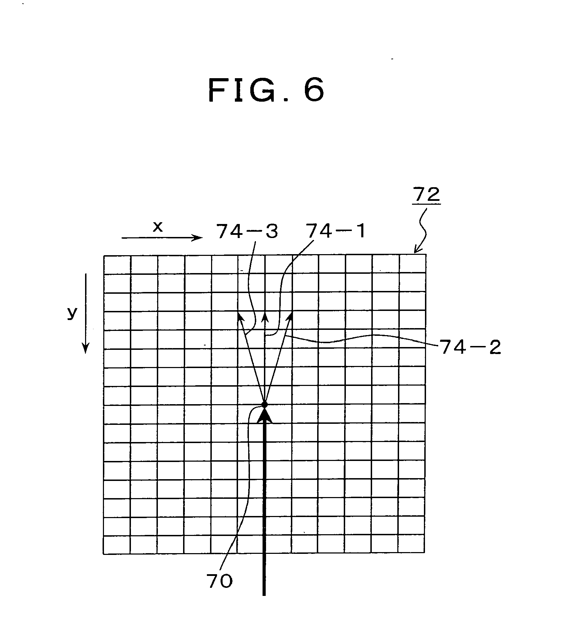

FIG. 5 is an explanatory diagram of an estimation process of a travel position according to the present embodiment by use of an image captured by a camera during traveling. FIG. 5 is a state of the mobile robot 10 after it is turned to the left direction by 90 degrees at the traveling direction change point P1 of the planned path 64 during travel of the mobile robot 10 along the planned path 64 shown in FIG. 4, and it is assumed that the estimation process of the travel position using the image captured by the camera at this timing. In this case, the mobile robot 10 is traveling in the direction shown by an arrow, and the camera 18 loaded on the mobile robot is also in the sight-line direction shown by the arrow and takes an actual image by a view angle $\alpha$ shown by broken lines. The position of the mobile robot 10 in FIG. 5 is recognized as a predicted position which is an accumulation of travel distances, which are calculated based on detected pulses of the wheel turning-angle sensor 32, relative to the previous estimated position in the travel position prediction unit 34 of FIG. 3. Since it includes errors in practice due to slippage of the wheels, the predicted position and the current position of the mobile robot 10 are not always matched. At the predicted travel position based on the travel position prediction unit 34 of the mobile robot 10, the predictive image generating unit 36 of FIG. 3 sets a candidate position matrix 72 of (pxq) composed of p pieces in an x direction and 1 pieces in a y direction, for example, around a predicted travel position 70 like FIG. 6, and the intersecting points of the matrix including the predicted travel position 70 of the candidate position matrix 72 are set as candidate positions. Then, edge images obtained by capturing images while virtually disposing the camera 18 at the candidate positions are generated as predictive edge images from the layout information such as the positions and heights of pillars and walls stored in advance in the environmental layout information database 38. In the case of the candidate matrix 72 of FIG. 6, the number of the candidate positions is (pxq) including the predicted travel position 70. As the candidate position matrix 72, for example, a candidate area that is $\pm 15$ cm from the center line passing through the predicted travel position 70 is set, and, for example, about 1000 points are set as the number of the candidate points (pxq). Furthermore, in the present embodiment, at each of the candidate positions including the predicted travel position 70, the sight-line direction of the camera is assumed to be directed in sight-line directions 74-2 and 74-3 which are varied to the left and right by about $\pm 6$ degrees relative to a sight-line direction 74-1 which corresponds to the robot movement direction, and predictive edge images are generated from the layout information. Consequently, in addition to correct estimation of the travel position about the current predicted travel position, correct direction estimation about the moving direction of the mobile robot at the predicted travel position 70 can be realized. At each of the candidate positions in the candidate position matrix 72, the sight-line direction of the camera may be fixed merely in the sight-line direction 74-1 corresponding to the moving direction, and movement to the sight-line directions 74-2 and 74-3 which are $\pm 6$ degrees in the left and right directions may be omitted. As the number of the candidate positions for generating the predictive edge images set in the vicinity of the predicted travel position 70, an arbitrary number of the candidate positions can be determined depending on the processing ability of the image processing board 50 of FIG. 2 mounted on the mobile robot. Herein, comparison performed by the position estimation unit 40 shown in FIG. 3 between the actual edge image and the predictive edge images and determination of the candidate position at which the degree of similarity is the maximum can use either

(1) a method in which correlations between the actual edge image and the predictive edge images are calculated, and the candidate position at which the correlation is the maximum is estimated as the travel position or
(2) a method in which the number of overlapping pixels of the actual edge image and the predictive edge images is calculated, and the candidate position at which the number of overlapping pixels is the maximum is estimated as the travel position.

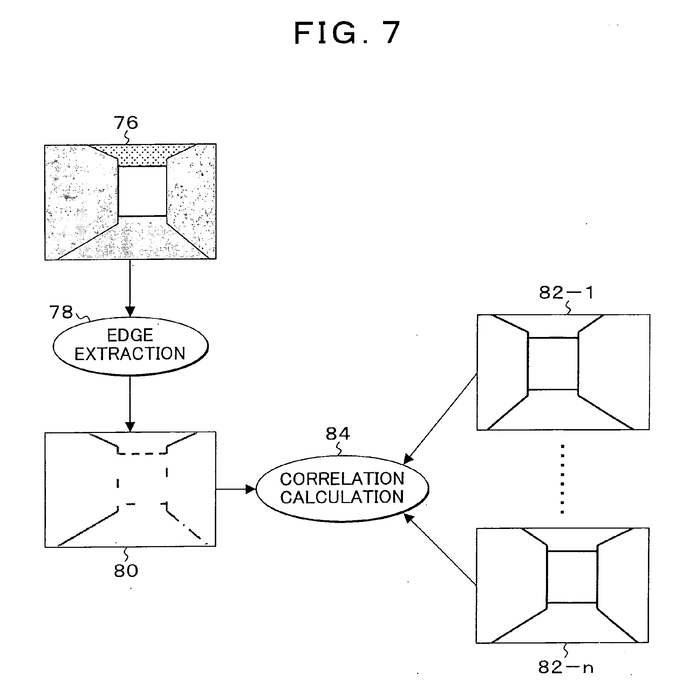

FIG. 7 is an explanatory drawing of a determination process of the degrees of similarity according to correlation calculations. In FIG. 7, edge extraction 78 is performed for an actual image 76 captured by the camera 18, for example, by subjecting it to differentiating processing, and an actual edge image 80 including extracted edge parts serving as the boundaries between the corridors, walls, and ceiling in the actual image 76 is obtained. Meanwhile, in synchronization with input of the actual image 76, predictive edge images 82-1 to 82-n are generated from the layout information on the assumption that, for example as shown in FIG. 6, the camera 18 is disposed at the candidate positions set in the vicinity of the predicted travel position 70. Then, in correlation calculations 84, correlation calculations are performed respectively for the actual edge image 80 and the predictive edge images 82-1 to 82-n. Herein, the predictive edge images 82-1 to 82-n based on the layout information can be generated and obtained from calculations based on camera parameters of the camera 18 in the state in which the camera 18 is virtually disposed at the candidate positions which are set in the vicinity of the predicted travel position 70 in FIG. 6. The predictive edge image can be captured by the camera set at a candidate position in the present embodiment by converting a three-dimensional layout space based on the layout information to a two-dimensional planar image viewed from the camera set at the candidate position by the camera. When this relation is mathematized, the predictive edge image can be generated as the planar image of the three-dimensional layout space of the case in which the camera is virtually set at each of the candidate position. The coefficients used in the relational expressions which converts the three dimensional layout space to the two-dimensional planar image are camera parameters. More specifically, when a point (X, Y, Z) in a layout three-dimensional space appear at a point (Xc, Yc) in a camera image, the relation between them can be provided by the following expression.

$$
\begin{bmatrix} HcXc \\ HcYc \\ Hc \end{bmatrix} = \begin{bmatrix} C_{11} & C_{12} & C_{13} & C_{14} \\ C_{21} & C_{22} & C_{23} & C_{24} \\ C_{31} & C_{32} & C_{33} & C_{34} \end{bmatrix} \begin{bmatrix} X \\ Y \\ Z \\ 1 \end{bmatrix} \qquad (1)
$$

Herein, Hc is a medium variable. Coefficients C11 to C34 of a 3x4 matrix are the camera parameters and include all the information such as the position and posture of the camera and the price of the lens. Since there are twelve camera parameters C11 to C34 in total, the values of the camera parameters C11 to C34 can be determined in advance by six or more reference points in the layout three-dimensional space and the two-dimensional image of the camera. When the values of the camera parameters C11 to C34 are determined in advance in this manner, and when the camera is placed at an arbitrary candidate position, the conversion expressions which convert the layout three-dimensional space to a predictive edge image can be provided as the following expressions.

$$
X_c = \frac{C_{11}X + C_{12}Y + C_{13}Z + C_{14}}{C_{31}X + C_{32}Y + C_{33}Z + C_{34}} \qquad (2)
$$

$$
Y_c = \frac{C_{21}X + C_{22}Y + C_{23}Z + C_{24}}{C_{31}X + C_{32}Y + C_{33}Z + C_{34}} \qquad (3)
$$

When the expressions (2) and (3) are applied to all the pixel coordinates (X, Y, Z) representing edges in the layout three-dimensional space based on the candidate position and obtained, all the pixels representing edges in the predictive edge image can be obtained. The correlation calculations 84 performed between the actual edge image 80 and the predictive edge images 82-1 to 82-n of FIG> 7 can be provided by the following expression.

$$
NCC = \frac{\sum (R_{ij} - R_m)(S_{ij} - S_m)}{\sqrt{\sum (S_{ij} - S_m)^2}\sqrt{\sum (R_{ij} - R_m)^2}}, \quad R_m = \frac{1}{n}\sum R_{ij} \quad, \quad S_m = \frac{1}{n}\sum S_{ij} \quad (4)
$$

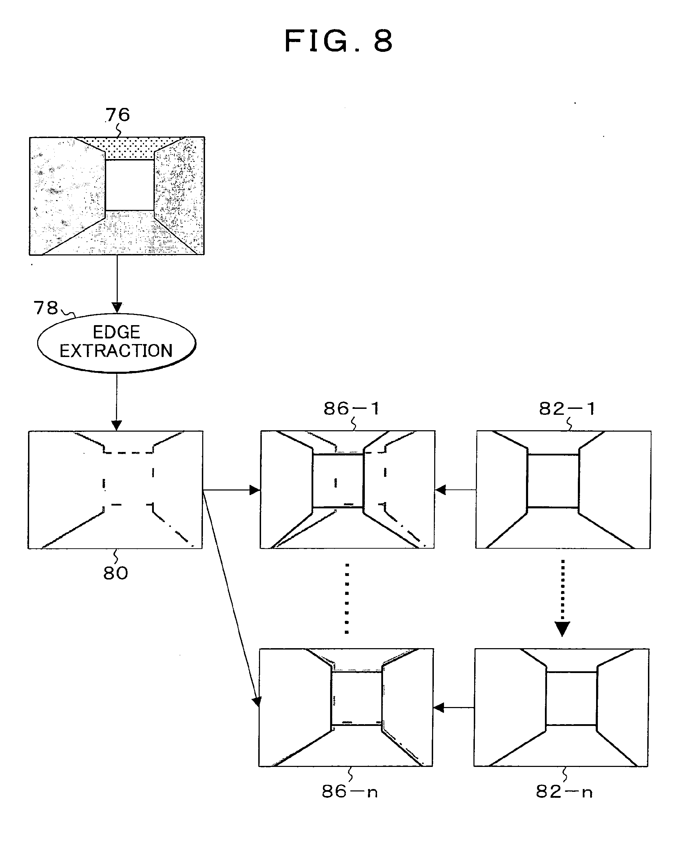

Herein, $R_{ij}$ in the expression (4) represents each pixel of the edge image in the layout three-dimensional space, $S_{ij}$ represents each pixel value of the predictive edge image, and n represents the number of pixels of the image. In such estimation of the current travel position using images in the present embodiment, an actual edge image is extracted from an actual image, the environments to be compared with it are predictive edge images composed of merely layout information serving as map information representing positions and heights of pillars and walls which are not relevant to the image information of the actual environment, the data amount of the layout information is significantly small compared with actual environmental images and can be readily obtained from information such as design drawings of the environment, and a registering process of the layout information to the mobile robot can be readily performed. Also in the estimation process of the current travel position, the candidate position at which the degree of similarity is the maximum is estimated by matching of similarities by means of correlation calculations between an actual edge image extracted from an actual image and predictive edge images which are viewed from candidate positions set in the vicinity of a predicted travel position and generated based on layout information; therefore, the number of pixels is sufficiently small even though it is image processing since they are edge images, and estimation of the correct current position can be performed at higher speed by a small device. FIG. 8 is an explanatory drawing of a process in which the degrees of similarity between an actual edge image and predictive edge images are obtained by the overlapping number of the pixels which constitutes edges in position estimation in the present embodiment. In FIG. 8, edge extraction 78 is performed by differentiating processing for the actual image 76 so as to determine the actual edge image 80. Meanwhile, at the same timing, the predictive edge images 82-1 to 82-n are generated from the layout information respectively for the candidate positions set in the vicinity of the predictive travel position. The predictive edge image that is most similar to the actual edge image 80 is detected in this state; therefore, in this embodiment, for example, an overlapping determination image 86-1 in which the actual edge image 80 is overlapped with the predictive edge image 82-1 is generated, and the total number of pixels in the part where the edge part of the actual edge image 80 and the edge part of the predictive edge image 82-1 are overlapped in the overlapping determination image 86-1. The number of overlapping pixels of the edge images is obtained for each of the overlapping determination images 86-1 to 86-n of such actual edge image 80 and predictive edge images 82-1 to 82-n, a predictive edge image 82-i having the maximum number of overlapping pixels is determined, and the candidate position thereof is estimated as the current travel position. When the determination of the maximum degree of similarity by means of the correlation calculations of FIG. 7 and the maximum degree of similarity by means of the number of overlapping pixels are compared with each other, in the case in which extraction of the actual edge image 80 is insufficient and an edge(s) is discontinuous, the correlation value is reduced corresponding to the discontinuity in the case of the correlation calculations; however, in the case of the number of edge overlapping pixels, even if discontinuity is generated in the edges of the actual edge image, the discontinuity of the edges does not affect determination of the number of overlapping pixels as long as the discontinuity of the edges are in the parts other than the overlapping part of the edges, and comparison processing of the degrees of maximum similarities that is more stable than the correlation calculations can be performed. The determination of the maximum degree of similarity by means of the correlation calculations of FIG. 7 and the maximum degree of similarity by means of the overlapping pixels of FIG. 8 may be individually performed or a combination of both of them may be performed. For example, the correlation values obtained by the correlation calculations of FIG. 7 may be sorted, a predetermined number of top candidate positions may be selected, the determination process of the number of overlapping pixels of FIG. 8 may be applied to the predictive edge images of the selected candidates, and the candidate position corresponding to the predictive edge image of the maximum number of overlapping pixels may be estimated as the travel position.

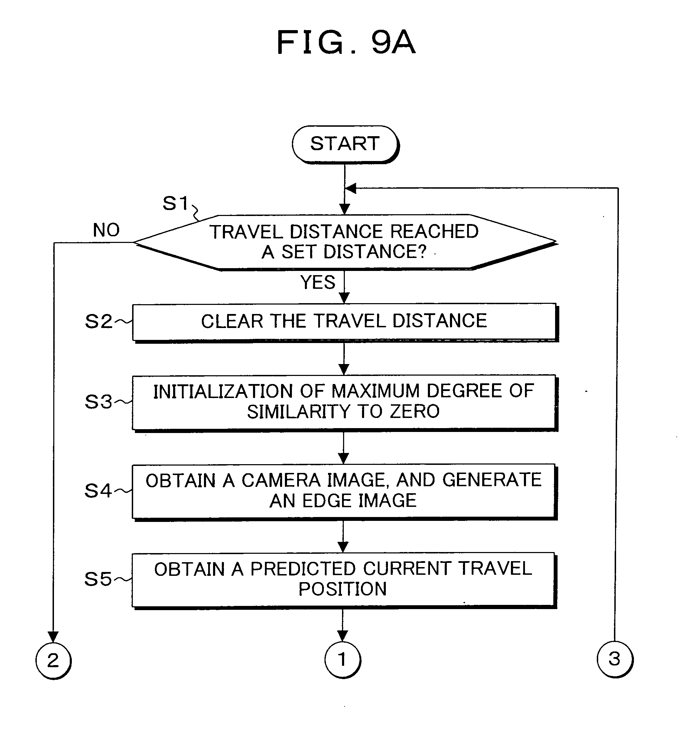

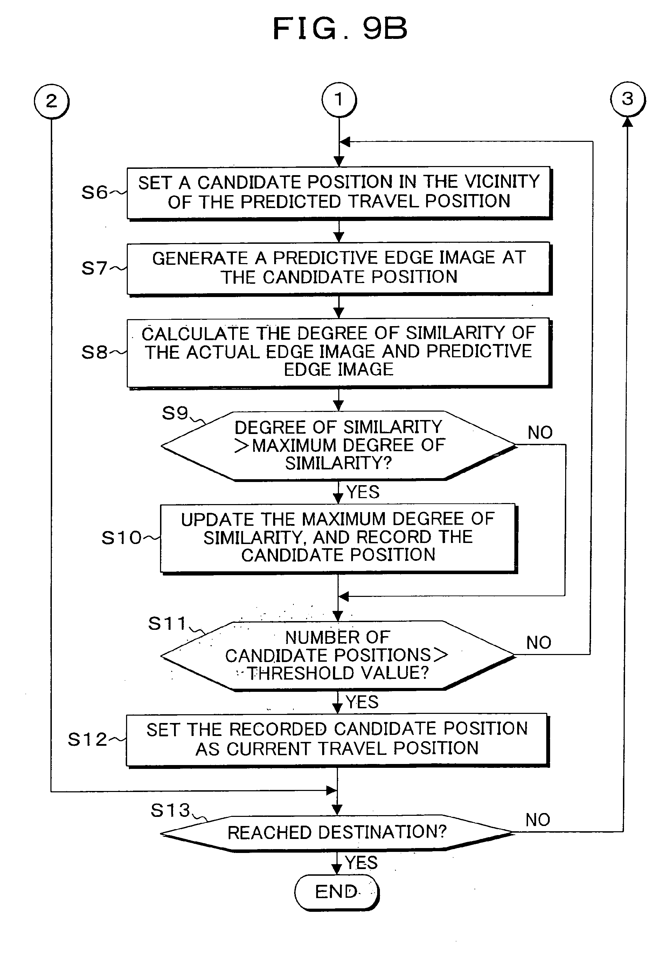

FIGs. 9A and 9B are flow charts of a travel position estimation process in the present embodiment, and it will be described below with reference to FIG. 3. In FIGs. 9A band 9B, first of all, in step S1, whether the travel distance has reached a set distance ΔL or not is checked, for example, by the travel position prediction unit 34 based on pulses output from the wheel turning-angle sensor 32; and, when it reaches the set distance ΔL, after the travel distance is cleared in step S2, an estimation process of the travel position from step S3 is started. In the estimation process of the travel position, in step S3, the maximum degree of similarity is initialized to zero; and then, in step S4, the camera image captured by the camera 18 at that point is obtained by the image input unit 42, and an edge image is generated by differentiating processing by the edge image generating unit 44. Then, in step S5, the current travel position predicted by the travel position prediction unit 34 is obtained, and candidate positions are set by the predictive image generating unit 36, for example like FIG. 6, in the vicinity of the predicted travel position in step S6. Next, in step S7, one of the candidate positions is selected, and a predictive edge image at the selected candidate position is generated. Specifically, the camera 18 is assumed to be virtually placed at the selected candidate position, and the edge image of the layout three-dimensional information about a layout three-dimensional space obtained from the layout information of the environmental layout information database 38 is converted into a two-dimensional planar edge image through calculations using the camera parameters C11 to C34 of above described expressions (2) and (3), thereby generating a predictive edge image. Next, in step S8, the degree of similarity of the actual edge image and the predictive edge image is calculated. This calculation of the degree of similarity is either the correlation calculation 84 shown in FIG. 7 or the number of edge overlapping pixels shown in FIG. 8. Subsequently, in step S9, the calculated degree of similarity is compared with the maximum degree of similarity at that point. Since this is the first comparison process, the maximum degree of similarity is zero which is initialized in step S3; therefore, the calculated degree of similarity is always equal to or more than zero, and the process proceeds to step S10 in which the maximum degree of similarity is updated to the degree of similarity calculated in step S8, and the candidate position at that point is recorded. Subsequently, the process proceeds to step S11, and if the number of processed candidate positions is less than a predetermined threshold value which is determined in advance, the process returns to step S6, the next candidate position is generated, and the processes of steps S7 to S10 are repeated. As a result of repeating the processes of steps S6 to S11, the candidate position having the maximum degree of similarity among the predictive edge images of a plurality of candidate points always remains as a recoded result. When the number of candidate positions exceeds the threshold value in step S11, the process proceeds to step S12 in which, since the candidate position recorded in step S10 is the candidate position of the maximum degree of similarity, it is set as the current travel position. Subsequently, whether it has reached the destination or not is checked in step S13. If it has not reached, the process returns to step S1 , and similar processes are repeated; and if it has reached the destination, the series of travel position estimation process is terminated. The present invention also provides a program executed by a computer loaded on the mobile robot, specifically, the hardware configuration like FIG. 2, and the contents of the program is the contents according to the flow chart of FIGs. 9A and 9B. The present invention also includes arbitrary modifications that do not impair the object and advantages thereof, and is not limited by the numerical values shown in the above described embodiment.

**Claims**

1.  A mobile robot which travels in an environment such as a facility, **characterized by** having
    a path planning unit which plans a travel path to a destination based on an estimated current travel position and outputs a travel command;
    a travel control unit which performs travel control so as to follow the travel path based on the travel command of the path planning unit;
    a position prediction unit which accumulates a travel distance, which is detected by a turning-angle sensor of a wheel, to the estimated current travel position and predicts the current travel position;
    a predictive image generating unit which generates a plurality of predictive edge images, which are composed of edge information and captured when the imaging unit is virtually disposed at the current travel position predicted by the position prediction unit and candidate positions in the vicinity of it, based on layout information of the environment;
    an edge image generating unit which extracts edge information from an actual image of the traveling direction which is captured by the imaging unit and generates an actual edge image; and
    a position estimation unit which compares the actual edge image with the plurality of predictive edge images, estimates a candidate position of the predictive edge image at which the degree of similarity is the maximum as a travel position, and updates the travel position of the path planning unit and the position prediction unit.

2.  The mobile robot according to claim 1, **characterized in that** the position estimation unit calculates a correlation between the actual edge image generated by differentiating processing of the actual image and each of the predictive edge images and estimates the candidate position of the predictive edge image at which the correlation is the maximum as the travel position.

3.  The mobile robot according to claim 1, **characterized in that** the position estimation unit calculates the number of overlapping pixels of the actual edge image generated by differentiating processing of the actual image and each of the predictive edge images and estimates the candidate position of the predictive edge image at which the number of overlapping pixels is the maximum as the travel position.

4.  The mobile robot according to claim 2 or 3, **characterized in that**
    the predictive image generating unit changes the image-capturing direction of the imaging unit for each of the candidate positions and generates the plurality of predictive edge images.

5.  The mobile robot according to claim 1, **characterized in that** the predictive image generating unit generates the predictive edge images based on camera parameters of the imaging unit and three-dimensional coordinates of the layout information.

6.  The mobile robot according to claim 1, **characterized in that** the estimation process of the current travel position based on the actual edge image and the plurality of predictive edge images is repeated every predetermined travel distance or predetermined movement time.

7. A control method of a mobile robot which travels in an environment such as a facility, **characterized by** having
a path planning step in which a travel path to a destination is planned based on an estimated current travel position and a travel command is output;
a travel control step in which travel control is performed so as to follow the travel path based on the travel command of the path planning step;
a position prediction step in which a travel distance, which is detected by a turning-angle sensor of a wheel, is accumulated to the estimated current travel position and the current travel position is predicted;
a predictive image generating step in which a plurality of predictive edge images, which are composed of edge information and captured when the imaging unit is virtually disposed at the current travel position predicted in the position prediction step and candidate positions in the vicinity of it, are generated based on layout information of the environment;
an edge image generating step in which edge information is extracted from an actual image of the traveling direction which is captured by the imaging unit and an actual edge image is generated; and
a position estimation step in which the actual edge image is compared with the plurality of predictive edge images, a candidate position of the predictive edge image at which the degree of similarity is the maximum is estimated as a travel position, and the travel position in the path planning step and the position prediction step is updated.

8. The control method of the mobile robot according to claim 7, **characterized in that**, in the position estimation step, a correlation between the actual edge image generated by differentiating processing of the actual image and each of the predictive edge images is calculated and the candidate position of the predictive edge image at which the correlation is the maximum is estimated as the travel position.

9. The control method of the mobile robot according to claim 7, **characterized in that**, in the position estimation step, the number of overlapping pixels of the actual edge image generated by differentiating processing of the actual image and each of the predictive edge images is calculated and the candidate position of the predictive edge image at which the number of overlapping pixels is the maximum is estimated as the travel position.

10. The control method of the mobile robot according to claim 8 or 9, **characterized in that**,
in the predictive image generating step, the image-capturing direction of the imaging step is changed for each of the candidate positions and the plurality of predictive edge images are generated.

11. The control method of the mobile robot according to claim 7, **characterized in that**, in the predictive image generating step, the predictive edge images are generated based on camera parameters of the imaging step and three-dimensional coordinates of the layout information.

12. The control method of the mobile robot according to claim 7, **characterized in that** the estimation process of the current travel position based on the actual edge image and the plurality of predictive edge images is repeated every predetermined travel distance or predetermined movement time.

13. A computer-readable storage medium which stores a program **characterized by** causing a computer of a mobile robot which travels in an environment such as a facility to execute,
a path planning step in which a travel path to a destination is planned based on an estimated current travel position and a travel command is output;
a travel control step in which travel control is performed so as to follow the travel path based on the travel command of the path planning step;
a position prediction step in which a travel distance, which is detected by a turning-angle sensor of a wheel, is accumulated to the estimated current travel position and the current travel position is predicted;
a predictive image generating step in which a plurality of predictive edge images, which are composed of edge information and captured when the imaging unit is virtually disposed at the current travel position predicted in the position prediction step and candidate positions in the vicinity of it, are generated based on layout information of the environment;
an edge image generating step in which edge information is extracted from an actual image of the traveling direction which is captured by the imaging unit and an actual edge image is generated; and
a position estimation step in which the actual edge image is compared with the plurality of predictive edge images, a candidate position of the predictive edge image at which the degree of similarity is the maximum is estimated as a travel position, and the travel position in the path planning step and the position prediction step is updated.

14. The storage medium according to claim 13, **characterized in that**, in the position estimation step, a correlation between the actual edge image generated by differentiating processing of the actual image and each of the predictive edge images is calculated and the candidate position of the predictive edge image at which the correlation is the maximum is estimated as the travel position.

15. The storage medium according to claim 13, **characterized in that**, in the position estimation step, the number of overlapping pixels of the actual edge image generated by differentiating processing of the actual image and each of the predictive edge images is calculated and the candidate position of the predictive edge image at which the number of overlapping pixels is the maximum is estimated as the travel position.

16. The storage medium according to claim 14 or 15, **characterized in that**,
in the predictive image generating step, the image-capturing direction of the imaging step is changed for each of the candidate positions and the plurality of predictive edge images are generated.

17. The storage medium according to claim 13, **characterized in that**, in the predictive image generating step, the predictive edge images are generated based on camera parameters of the imaging step and three-dimensional coordinates of the layout information.

18. The storage medium according to claim 13, **characterized in that** the estimation process of the current travel position based on the actual edge image and the plurality of predictive edge images is repeated every predetermined travel distance or predetermined movement time.

# FIG. 1

# FIG. 2

**46** CPU BOARD

**22** TOUCH-PANEL -EQUIPPED LCD

**54**

**52**

**48** DSP BOARD

**56** SENSOR BOARD

SENSOR ~32-1

SENSOR ~32-n

**58** MOTOR CONTROL BOARD

SENSOR ~28-1

SENSOR ~28-n

**50** IMAGE PROCESSING BOARD

**60** CAMERA SWITCHING BOARD

CAMERA ~18-1

CAMERA ~18-n

# FIG. 3

EP 1 860 515 A2

# FIG. 4

# FIG. 5

# FIG. 6

# FIG. 7

# FIG. 8

# FIG. 9A

```
          ┌──────────┐
          │  START   │
          └────┬─────┘
               │
       S1      ▼
  NO ◄───< TRAVEL DISTANCE REACHED >
           A SET DISTANCE?
               │ YES
               ▼
  S2──┤ CLEAR THE TRAVEL DISTANCE │
               │
               ▼
  S3──┤ INITIALIZATION OF MAXIMUM DEGREE OF │
       SIMILARITY TO ZERO
               │
               ▼
  S4──┤ OBTAIN A CAMERA IMAGE, AND GENERATE │
       AN EDGE IMAGE
               │
               ▼
  S5──┤ OBTAIN A PREDICTED CURRENT TRAVEL │
       POSITION
               │
               ▼
```

(2)                  (1)                  (3)

# FIG. 9B

② ① ③

S6~ **SET A CANDIDATE POSITION IN THE VICINITY OF THE PREDICTED TRAVEL POSITION**

S7~ **GENERATE A PREDICTIVE EDGE IMAGE AT THE CANDIDATE POSITION**

S8~ **CALCULATE THE DEGREE OF SIMILARITY OF THE ACTUAL EDGE IMAGE AND PREDICTIVE EDGE IMAGE**

S9~ **DEGREE OF SIMILARITY >MAXIMUM DEGREE OF SIMILARITY?** — NO

↓ YES

S10~ **UPDATE THE MAXIMUM DEGREE OF SIMILARITY, AND RECORD THE CANDIDATE POSITION**

S11~ **NUMBER OF CANDIDATE POSITIONS> THRESHOLD VALUE?** — NO

↓ YES

S12~ **SET THE RECORDED CANDIDATE POSITION AS CURRENT TRAVEL POSITION**

S13~ **REACHED DESTINATION?** — NO

↓ YES

**END**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9053939 A